# EUROPÄISCHE PATENTSCHRIFT

(11) **EP 2 006 166 B1**
(45) Veröffentlichungstag und Bekanntmachung des Hinweises auf die Patenterteilung: **21.07.2010**
(21) Anmeldenummer: 07012134.8
(22) Anmeldetag: 21.06.2007
(51) Int. Cl.: B60R 21/215, B60R 21/205

(54) **Airbagabdeckung**
Airbag cover
Recouvrement d'airbag

(43) Veröffentlichungstag der Anmeldung: 24.12.2008
(73) Patentinhaber: PEGUFORM GMBH, 79268 Bötzingen (DE)
(72) Erfinder: Nogaret, Eric, 68600 Biesheim (FR)
(74) Vertreter: Modrow, Stephanie

(56) Entgegenhaltungen:
- EP-A- 1 348 601
- EP-A- 1 745 988
- DE-A1- 19 949 170

## Beschreibung

Die vorliegende Erfindung betrifft eine in eine Innenraumverkleidung integrierte einteilige Airbagabdeckung mit einem Deckel sowie mindestens einem Scharnierelement mit einer als Drehachse für den Deckel vorgesehenen Sollbruchkerbe.

Aus der DE 197 01 502 C2 ist eine gattungsgemäße Airbagabdeckung bekannt, die als separates Bauteil ausgeführt ist, das in eine Öffnung einer Instrumententafel eingesetzt ist, wobei die Airbagabdeckung mittels einer Scharnieranordnung schwingbeweglich gelagert ist und die Öffnung der Airbagklappe mittels einer kombinierten Schwenk- und Gleitbewegung der Klappe erfolgt. Bei dieser Lösung wird es als nachteilhaft angesehen, dass die Optik der Instrumententafel durch das eingesetzte Bauteil geprägt ist.

Zur Vermeidung dieses Nachteils wurden Airbagabdeckungen vorgeschlagen, bei welchen der den Airbag abdeckende Bereich zusammen mit den übrigen Bereichen des entsprechenden Einbauteils als einstückiges Bauteil ausgebildet sind. Dabei ist der den Airbag abdeckende Bereich des Bauteils in der Regel durch Sollbruchstellen mit den übrigen Bereichen des Bauteils verbunden. Der entscheidende Nachteil dieser Anordnung besteht allerdings darin, dass das gesamte Bauteil aus ein und demselben Grundmaterial besteht. Da jedoch der den Airbag abdeckende Bereich besondere Anforderungen in Bezug auf Festigkeit und Elastizität erfüllen muss, damit beim Auslösen des Airbags Verletzungen der Fahrzeuginsassen vermieden werden, muss entweder somit das gesamte Bauteil aus dem gleichen hochwertigen und damit teueren Material bestehen,
oder es müssen für den Bereich der Airbagabdeckung zusätzliche Maßnahmen ergriffen werden, damit insbesondere ein Splittern dieses Teils beim Öffnen des Airbags vermieden wird.

So sind beispielsweise in der DE 199 58 865 A1 auf der dem Airbag zugewandten Seite der Trägerschicht Splitterschutzteile aus einem im Wesentlichen elastischen und splitterfreien Material vorgesehen, mit deren Hilfe der Deckel beim Öffnen des Airbags zusammengehalten wird. Der Deckel ist gleichzeitig über einen dehnbaren Verbindungsabschnitt mit der Kraftfahrzeugkarosserie verbunden, wodurch im Falle eines Öffnens des Airbags ein Aufklappen ermöglicht wird, ohne dass der Deckel selber frei in den Fahrzeuginnenraum gelangen kann.

Diese zusätzlichen Sicherheitsmaßnahmen sind allerdings mit einem entsprechenden technischen Aufwand verbunden, was die Fertigung der Airbagabdeckung entsprechend verteuert. Ein weiterer Nachteil des einstückigen Konzepts ist, dass die erforderlichen Sollbruchlinien in der Regel in einem zusätzlichen Arbeitsschritt ausgebildet werden müssen. Dabei kommt erschwerend hinzu, dass die Sollbruchlinien, die üblicherweise auf der der Sicht abgewandten Seite der Instrumenttafel ausgebildet werden, sich durch die Trägerschicht und Schaumschicht bis hin zur Formhaut fortsetzen, wodurch sich, insbesondere bei längerer Lebenszeit des Bauteils die Sollbruchlinien auf der Dekorseite (Sichtseite) der Formhaut abzeichnen.

Aus der DE 199 48 021 A1 ist eine Abdeckung für einen Airbag bekannt, die in eine Instrumententafel eines Personenkraftwagens integriert ist, wobei die Instrumententafel aus einem formstabilen Trägerteil, einer geschäumten Schicht und einer Außenhaut (Formhaut) besteht, die einstückig miteinander verbunden sind. Die Airbagabdeckung selber ist als trennbarer Bereich aus einem hochfesten Material ausgebildet und in eine entsprechende Öffnung des Instrumententafelträgers eingesetzt. Dieses separate Bauteil ist zusammen mit dem Instrumententafelträger mit einer Schaumschicht und abschließend mit der sogenannten Formhaut bedeckt. Dabei ist der Airbagdeckel mit einem Fangband mit dem Instrumententafelträger fest verbunden. Da keine Sollbruchlinie in der Schaumschicht ausgebildet ist, besteht somit keine Gefahr des Abzeichnens einer solchen Linie auf der Sichtseite der Dekorfolie. Ein Nachteil dieser Anordnung besteht allerdings darin, dass das Fangband dem sich entfaltenden Airbag so gut wie keinen Widerstand entgegensetzt und die gesamte Energie des Airbags auf die Rückseite des Deckels einwirkt, der beim Öffnen die Schaumschicht mitsamt der Dekorfolie (Formhaut) mit sich reißt. Bei einem derart ungehinderten und heftigen Angriff auf die Außenhaut und die Schaumschicht besteht wiederum die Gefahr, dass Splitter abgetrennt werden, die die Kraftfahrzeuginsassen verletzen können.

Eine weitere ähnliche Airbagabdeckung nach den Merkmalen der Präambel aus Anspruch 1 ist durch die EP 1 344 601 bekannt.

Der Erfindung liegt somit das Problem zugrunde, eine Airbagabdeckung zur Verfügung zu stellen, die die Nachteile des Standes der Technik nicht aufweist. Gelöst wird das Problem durch eine Airbagabdeckung mit den Merkmalen des Anspruchs 1.

Besondere Ausführungsformen der Erfindung sind in den Unteransprüchen wiedergegeben.

Bei der erfindungsgemäßen Airbagabdeckung handelt es sich um ein separates Bauteil aus einem hochfesten, elastischen Material mit einem Deckel und mindestens einem Scharnierelement. Bei einer vorteilhaften Ausführungsform können Deckel und Scharnierelement mit einem eingelagerten textilen Gewebe, Kunststoffgewebe oder einem ebenfalls eingelagerten Blech verstärkt sein, wodurch das Bauteil auch bei extremen Temperaturen zusammengehalten und damit ein Splitterschutz erreicht wird.

Dabei werden die Haltelaschen für die Ankerprofile jeweils durch zwei vertikal zur Instrumententafeloberfläche verlaufende Rippen gebildet, die im Instrumententafelträger angeordnet sind. Diese Rippen enden an dem Anschlag für das Ankerprofil, wobei sie sich in einem spitzen Winkel unter Verengung der Führung für das Ankerprofil einander leicht annähern. Dies hat den Effekt, dass beim Eindringen der Ankerprofile in die sich verengenden Haltelaschen ein Teil der Energie des sich öffnenden Airbags absorbiert wird, wodurch der Öffnungsvorgang kontrolliert und moderat gestaltet wird.

Durch eine besondere Ausgestaltung der Ankerprofile kann das Öffnen der Airbagabdeckung weiter optimiert werden. So sind die Ankerprofile als in Längsrichtung geteilte T-Profile ausgebildet, die zum Einen eine Führung der Ankerprofile in der Aufnahmelasche ermöglichen und zum Anderen in einem bestimmten Ausmaß ein Zusammendrücken der beiden Flügel des Ankerprofils erlauben, was ebenfalls mit einer entsprechenden Energieabsorption verbunden ist. Auch das trägt dazu bei, dass das Öffnen des Deckels gedämpft wird.

Eine weitere vorteilhafte Ausführungsform sieht vor, dass zur Herstellung der Airbagabdeckung ein Kunststoff mit einer Nanostruktur eingesetzt wird. Derartige Materialien besitzen sowohl bei hoher als auch bei tiefer Temperatur eine außerordentliche Festigkeit und Elastizität, so dass auf den zusätzlichen Einbau von Geweben oder Blech als Splitterschutz verzichtet werden kann. Nanostrukturierte Kunststoffe zeichnen sich bis zu einer kritischen Temperatur von - 35 °C durch eine hohe Elastizität aus, während konventionelle Kunststoffe in diesen Temperaturbereichen bereits verspröden und damit zum Splittern neigen.

Das Scharnierelement ist mit sogenannten Ankerprofilen bestückt, die formschlüssig zu korrespondierenden Haltelaschen im Träger angeordnet sind und mit diesen in einer Wirkverbindung stehen. Die Haltelaschen sind als Teil des Trägers für die Innenraumverkleidung ausgeführt und dienen als Halterung und Führung für die Ankerprofile. Das Scharnierelement weist in seinem oberen Abschnitt eine Sollbruchkerbe auf, die beim Entfalten des Airbags als Drehachse für den Deckel der Airbagabdeckung wirkt und so das Aufklappen des Deckels ermöglicht.

Beim Entfalten trifft der Airbag auf die Unterseite des Deckels und schiebt die gesamte Airbagabdeckung mitsamt Scharnierelement um den Betrag, mit dem die Haltelaschen die Ankerprofile aufnehmen können, in Richtung Fahrzeuginneres. Beim Auftreffen auf den Anschlag in den Haltelaschen werden die Ankerprofile blockiert und die Hubbewegung wird in eine Drehbewegung übergeleitet, wobei die Sollbruchkerbe die Drehachse des Scharnierelements bildet. Die Position der Sollbruchkerbe wird über die Höhe des Deckaufbaus (Schaum und Formhaut) bestimmt und ist so ausgelegt, dass beim Auftreffen des Ankerprofils auf den Anschlag die Sollbruchkerbe auf Höhe bzw. unmittelbar über der Formhaut positioniert ist.

Die Ankerprofile absorbieren in Kombination mit den Haltelaschen im Öffnungsfall des Airbags einen Teil der Energie des sich entfaltenden Airbags und ermöglichen damit ein kontrolliertes Öffnen des Deckels.

Um ein zu starkes Zusammendrücken dieser Flügel der Ankerprofile zu verhindern, können zwischen den Teilprofilen Querrippen angeordnet sein, mit deren Hilfe der Öffnungsvorgang noch exakter eingestellt werden kann. Das Zusammendrücken der Flügel der Ankerprofile oder auch die Verspannung zur Führung der des Deckels kann darüber hinaus über die Wandstärke des T-Profils eingestellt werden. Weitere Einstellungsmöglichkeiten der Energieabsorption sind durch die Wahl der Anzahl der Ankerprofile und des Winkels der Haltelasche gegeben.

Somit bieten sich bei dem oben geschilderten Öffnungsmechanismus eine Vielzahl von Möglichkeiten den Öffnungsvorgang exakt einzustellen und kontrolliert zu gestalten. Durch die richtige Dimensionierung und Abstimmung von Ankerprofil, Haltelasche und eventuellen Verstärkungsrippen kann überschüssige Energie beim Entfalten des Airbags absorbiert werden, was zu einer weiteren Reduzierung des Gefährdungspotentials für die Insassen führt.

Grundsätzlich wird die erfindungsgemäße Airbagabdeckung zunächst als separates Bauteil gefertigt. Bei einem bevorzugten Einsatz wird sie bei der weiteren Verarbeitung dann so in die Innenraumverkleidung eingebunden, dass sie haftungsfrei mit der Innenraumverkleidung Verbunden ist, wobei die Konturgeometrie des Deckels passgenau in korrespondierende Profile einer entsprechenden Öffnung in dem Träger für die Innenraumverkleidung eingreift.

Die Konturgeometrie des Deckels kann bei dieser Ausführung so gewählt werden, dass eine definierte Kraft erforderlich ist, um den Deckel aus der Öffnung im Träger zu drücken. Üblicherweise erfolgt die Einstellung dieser Kraft durch eine entsprechende Wahl des Profils.

Auch hier bieten sich viele Möglichkeiten das Deckelprofil und das korrespondierende Profil der Airbagöffnung aufeinander abzustimmen. So kann beispielsweise in einer bevorzugten Ausführungsform das Deckelprofil als Profilnase ausgebildet sein, die passgenau in eine V-förmige Profilnut in der Airbagöffnung des Instrumententafelträgers eingreift. Diese Nut kann unterbrochen sein, um das Öffnen des Deckels zu erleichtern. Insbesondere im Bereich der Ecken des Airbagdeckels kann es vorteilhaft sein, die Haltekraft des Deckels durch eine entsprechende Anpassung der Profile zu reduzieren.

Die Konturgeometrie des Airbagdeckels ist nicht nur so gewählt, dass der Öffnungskraftwiderstand kontrolliert eingestellt werden kann, sondern es sind weiterhin auch Vorrichtungen vorgesehen, die ein definiertes Aufreißen des Schaums und der Formhaut begünstigen. So weist in einer vorteilhaften Ausgestaltung die Konturgeometrie der Airbagabdeckung einen Profilhöcker auf, der in Richtung Schaum zeigt und als Öffnungshilfe fungiert, indem er ein örtlich definiertes Aufreißen des Schaums erleichtert. Das definierte Aufreißen kann weiterhin durch eine korrespondierende Verschwächungslinie im Bereich der Formhaut optimiert werden, wodurch Zerstörungen der Innenraumverkleidung weitgehend vermieden werden können.

Ein weiteres Mittel, um den Öffnungsvorgang zu optimieren, besteht in der Ausbildung einer Profilwanne im Bereich des Deckelrandes, wodurch eine Oberflächenvergrößerung des Deckels und damit eine bessere Anbindung des Schaums erreicht wird. Die bessere Anbindung des Schaums führt zu einer weiteren Reduzierung der Splitterbildung beim Öffnen des Airbags und damit zu einer verminderten Gefährdung der Insassen. Einen ähnlichen oder auch einen zusätzlichen Effekt in diese Richtung kann man auch durch eine Narbung der Oberfläche des Airbagdeckels erreichen.

Im Öffnungsfall des Airbags wird der gesamte Deckel angehoben und in Richtung Fahrzeuginneres verschoben, wobei dieser Vorschub durch die Ankerprofile kontrolliert wird, die mit einem bestimmten Betrag von den Aufnahmelaschen aufgenommen werden können. Dieser Betrag wird bestimmt durch den Abstand der Sollbruchkerbe vom Deckaufbau der Innerraumverkleidung bzw. der äußeren Formhaut des Deckaufbaus. Dieser Abstand ist so gewählt, dass die Sollbruchkerbe bei angehobener Airbagabdeckung auf Höhe der Formhaut der Innenraumverkleidung zu stehen kommt. An dieser Stelle wird die Hubbewegung der Airbagabdeckung beim Öffnen in eine Schwenkbewegung überführt und der Deckel klappt auf, wobei die Sollbruchkerbe als Drehachse ihre Scharnierwirkung entfaltet.

Um die passgenaue Einlagerung der Airbagabdeckung in eine entsprechende Öffnung der Innenraumverkleidung zu vereinfachen, bietet sich vorteilhaft ein Verfahren zur Herstellung von Innenraumverkleidungen an, bei dem die Airbagabdeckung aus einem im Vergleich zum Material des Trägers der Verkleidung antagonistischen Material, das keine haftende Verbindung mit dem Material des Trägers eingeht, gefertigt wird.

Das Verfahren umfasst als ersten Schritt das spritzgießen der Airbagabdeckung, wobei gleichzeitig ein Splitterschutz in die Airbagabdeckung eingelagert werden kann, wofür ein textiles Gewebe, Kunststoffgewebe oder auch ein Blech in Frage kommt. Alternativ dazu ist es jedoch auch möglich eine Airbagabdeckung ohne zusätzlichen Splitterschutz zu fertigen, wenn der eingesetzte Kunststoff eine Nanostruktur aufweist und seine Elastizität auch bei tiefen Temperaturen behält.

Die Airbagabdeckung wird anschließend in eine Spritzform für einen Träger für eine Innenraumverkleidung eingelegt und dann mit dem Träger umspritzt. Dabei werden Airbagabdeckung und Träger jeweils aus antagonistischen Polymermaterialien gefertigt, die keine Haftverbindung miteinander eingehen. Auf diese Weise gelingt es, die Airbagabdeckung als separates Formteil in den Träger zu integrieren und einzulagern.

Nach Fertigstellung des Trägers für die Innenraumverkleidung mit integrierter Airbagabdeckung wird eine der jeweiligen Verkleidung entsprechende Formhaut hinterschäumt, wobei der Schaum gleichzeitig mit dem Träger mitsamt integrierter Airbagabdeckung verbunden wird. Als Formhaut können die üblichen Formhäute für Verkleidungsteile von Kraftfahrzeugen eingesetzt werden, wie z.B. über Slushverfahren hergestellte Formhäute, tiefgezogene oder vorgeformte Folien, Sprühhäute, Gießhäute etc. Dabei werden Materialien ebenfalls die in der Branche üblichen Polymermaterialien eingesetzt.

Da die Airbagabdeckung zuerst gefertigt und dann mit dem Träger umspritzt wird, sollte der Träger aus einem Material bestehen, das einen niedrigeren Schmelzpunkt hat als das Material für die Abdeckung. Als mögliche Materialien für den Träger kommen beispielsweise Polyoxymethylen (POM) und Polypropylen (PP) in Frage, während für die Airbagabdeckung Polyoxymethylen (POM), Polyethylenterephthalat (PET), Acrylnitril-Butadien-Styrol (ABS) und Polyamid (PA6) Polybutylenterephthalat (PBT), Polycabonat (PC) eingesetzt werden können. Dabei sind die Polymermaterialien sowohl für den Deckel als auch für den Träger üblicherweise mit Glasfasern verstärkt. Bei einer bevorzugten Ausführungsform des Verfahrens ist vorgesehen, dass das Material für die Airbagabdeckung Polybutylenterephthalat (PBT) oder Polyoxymethylen (POM) ist, während als Material für den Träger für die Innenraumverkleidung beispielsweise faserverstärktes Polypropylen (PP) eingesetzt wird.

Im Folgenden wird die vorliegende Erfindung anhand von Zeichnungen ausführlich erläutert.

Dabei zeigen:
Figur 1 einen Querschnitt durch eine Instrumententafel mit integriertem Airbagmodul;
Figur 2 eine grafische Darstellung der separaten Airbagabdeckung;
Figuren 3 und 3a jeweils einen Querschnitt eines Ausschnitts aus der Innenraumverkleidung;
Figur 4 eine grafische Darstellung eines Ausschnitts des Instrumententafelträgers mit Airbagabdeckung;
Figuren 5a, 5b und 5c die schematische Darstellung des Öffnungsmechanismus anhand von Querschnitten durch die Instrumententafel zu unterschiedlichen Öffnungszeitpunkten; und
Figur 6 einen Querschnitt einer Innenraumverkleidung mit einer beidseitig öffnenden Airbagabdeckung.

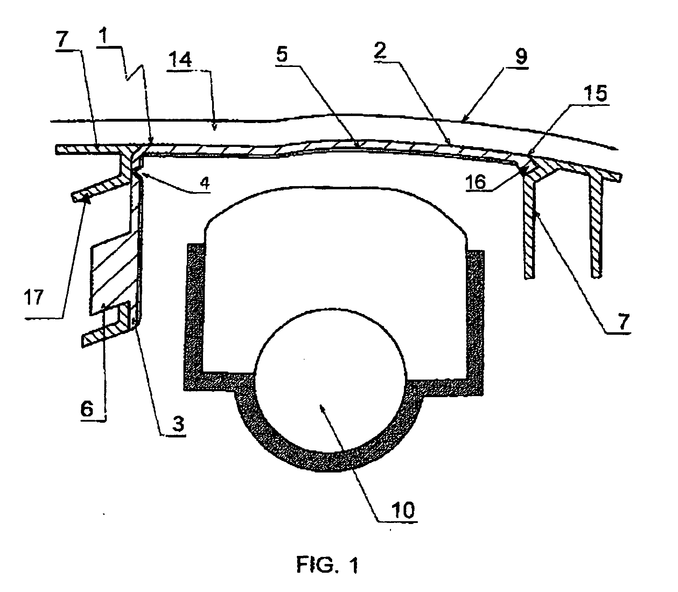

Die Fig. 1 zeigt einen Querschnitt durch die Instrumententafel mit integriertem Airbagmodul. Dabei ist die Airbagabdeckung 1 mit Deckel 2 und Scharnierelement 3 sowie Splitterschutz 5 zu erkennen, die in eine entsprechende Öffnung in der Instrumententafel eingepasst ist. Das Scharnierelement 3 weist eine Sollbruchkerbe 4 sowie ein Ankerprofil 6 auf.

Die Airbagabdeckung 1 ist passgenau eingelagert in den Instrumententafelträger 7, wobei die Konturgeometrie 15 des Deckels 2 eine Profilnase 16 aufweist, die in ein korrespondierendes Hohlprofil 11 im Bereich der Öffnung des Instrumententafelträgers 7 eingelagert ist. Mit Hilfe der Konturgeometrie 15 wird der Öffnungskraftwiderstand des Deckels 2 kontrolliert und den aktuellen Erfordernissen angepasst werden. Der Instrumententafelträger 7 mit integrierter Airbagabdeckung 1 ist mit einer Schaumschicht 14 und einer Formhaut 9 abgedeckt, wobei die Formhaut 9 die Sichtseite der Instrumententafel bildet.

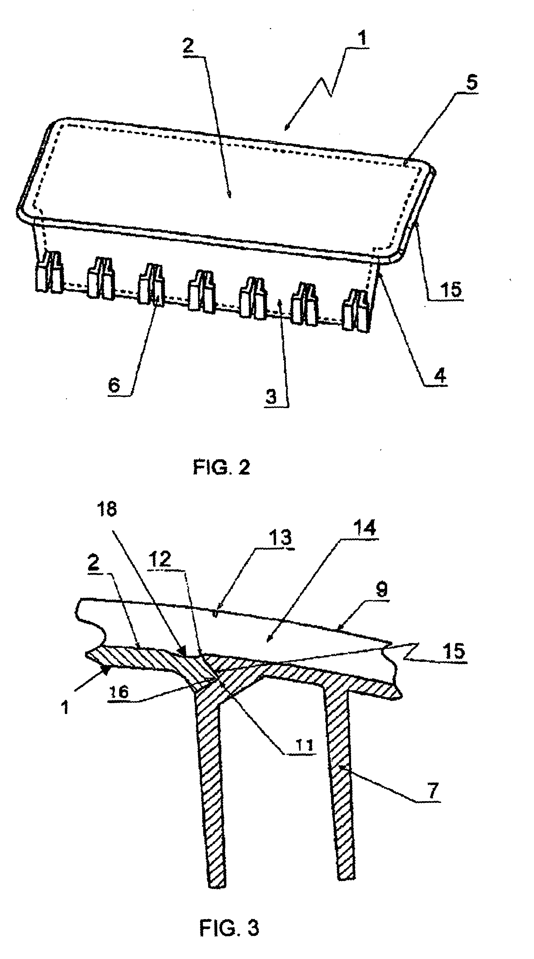

Die Fig. 2 zeigt eine dreidimensionale Darstellung der erfindungsgemäßen Airbagabdeckung 1 als Einzelbauteil. In dieser Darstellung ist die Konturgeometrie 15 des Deckels 2 zu erkennen. Das Scharnierelement 3 weist insgesamt sieben Ankerprofile 6 auf, die als in Längsrichtung geteilte T-Profile ausgeführt sind. Mit der gestrichelten Linie ist die Einlagerung eines Splitterschutzes 5 beschrieben, der die gesamte Airbagabdeckung 1 mit Scharnierelement 3 und Deckel 2 umfasst. Bei einer besonderen Ausführungsform der Airbagabdeckung 1, bei der ein nanostrukturierter Kunststoff eingesetzt wird, kann auf die Einlagerung des Splitterschutzes 5 verzichtet werden. Diese Ausgestaltung ist jedoch nicht Gegenstand dieser Zeichnung.

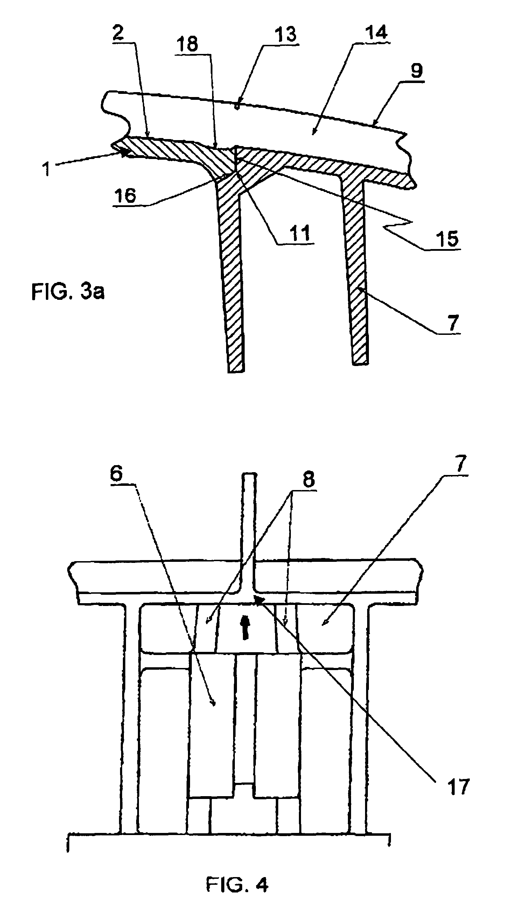

In den Fig. 3 und 4 sind insbesondere die Maßnahmen detailliert aufgeführt, die ein kontrolliertes Öffnen der Airbagabdeckung ermöglichen. So zeigt die Fig. 3 den Querschnitt eines Ausschnitts aus der Instrumententafel mit Airbagabdeckung 1, Instrumententafelträger 7, Schaumschicht 14 und Formhaut 9. In diesem Ausschnitt ist insbesondere die Konturgeometrie 15 des Airbagdeckels 2 verdeutlicht, wobei die Konturgeometrie 15 die Profilnase 16 umfasst, die passgenau in das Hohlprofil 11 der Öffnung des Instrumententafelträgers 7 eingelagert ist und in ihrem oberen Bereich einen in Richtung Schaumschicht 14 weisenden Profilhöcker 12 als Öffnungshilfe aufweist. Im Bereich der Formhaut 9 ist auf Höhe des Profilhöckers 12 eine Verschwächungslinie 13 zu erkennen. Profilhöcker 12 und Verschwächungslinie 13 wirken dahin, dass Schaum 14 und Formhaut 9 beim Öffnen des Airbags 10 definiert aufreißen.

Die Figur 3a zeigt ein alternatives Profil für die Konturgeometrie 15 des Airbagdeckels 2. In diesem Fall wird dem Öffnen des Deckels 2 durch den Träger 7 wenig oder gar keine Kraft mehr entgegengesetzt. Üblicherweise variiert in der Praxis die Konturgeometrie 15 zwischen den beiden in den Figuren 3 und 3a gezeigten Extremen. So wird je nach Bedarf eine mehr oder weniger starke Profilnase 16 ausgebildet oder auch in Bereichen, in denen das Öffnen des Deckels initiiert werden soll, ganz auf eine Profilnase 16 verzichtet, wie es in der Figur 3a angedeutet wird.

In der Fig. 4 ist ein einzelnes Ankerprofil 6 dargestellt, dass formschlüssig zu einer Haltelasche 8 im Bereich des Instrumententafelträgers 7 angeordnet ist und mit dieser in einer Wirkverbindung steht. In dieser Abbildung ist zu erkennen, dass die beiden Rippen der Haltelasche 8, die als Führung und Halterung für das Ankerprofil 6 gedacht sind, nach oben keilförmig in einem spitzen Winkel zusammenlaufen. Das Ankerprofil 6 selber ist als in Längsrichtung geteiltes T-Profil ausgeführt. Beide Maßnahmen dienen dazu, einen Bereich zu schaffen, in dem beim Öffnen der Airbagabdeckung 1 Energie abgebaut werden kann, wodurch das Ausmaß der Zerstörung des Instrumententafelträgers 7 im Öffnungsfall beim Entfalten des Airbags 10 reduziert werden und gleichzeitig der Schutz der Insassen weiter erhöht werden kann. Der Pfeil in Richtung Anschlag 17 zeigt den Weg an, den das Ankerprofil 6 beim Öffnen des Airbags 10 in einer Hubbewegung der Airbagabdeckung 1 in Richtung Fahrzeuginneres zurücklegt.

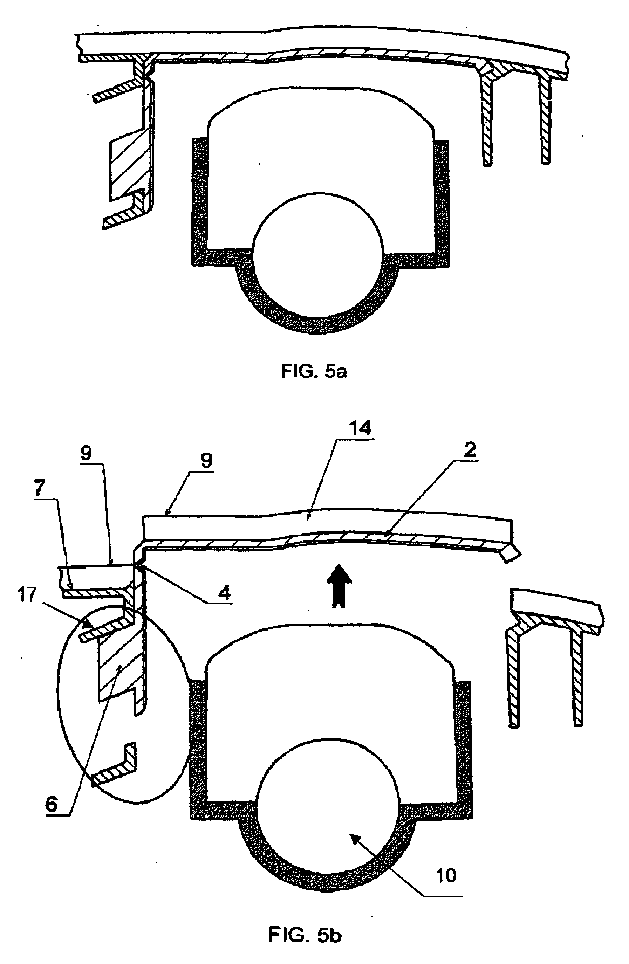

Die Fig. 5a bis 5c zeigen Querschnitte durch die Instrumententafel, die den öffnungsmechanismus der erfindungsgemäßen Airbagabdeckung 1 zu unterschiedlichen Öffnungszeitpunkten schematisch wiedergeben.

So ist in der Fig. 5a die geschlossene Airbagabdeckung 1 in Analogie zur Fig. 1 zu erkennen. Bei der Darstellung der Fig. 5a wurde auf die Bezugszeichen verzichtet, die der Figur 1 entnommen werden können.

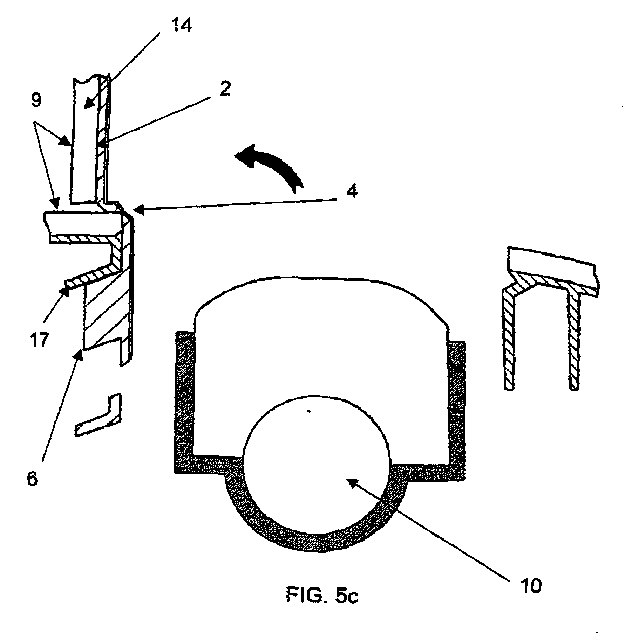

In der Fig. 5b hat der sich entfaltende Airbag die Abdeckung 2 aufgebrochen und mitsamt Schaum 14 und Formhaut 9 in einer Hubbewegung in Richtung Fahrzeuginneres verschoben. Dabei hat das Ankerprofil 6 den Anschlag 17 innerhalb der Haltelasche 8 im Bereich des Instrumententafelträgers 7 erreicht, wodurch die weitere Hubbewegung des Deckels 2 blockiert wird. Zu diesem Zeitpunkt befindet sich die Sollbruchkerbe 4 auf Höhe der Formhaut 9 und kann seine Wirkung als Drehachse für die Airbagabdeckung 1 entfalten, deren Deckel 2 nun aufklappt und den Weg für den Airbag 10 freigibt, was in der Figur 5c wiedergegeben ist.

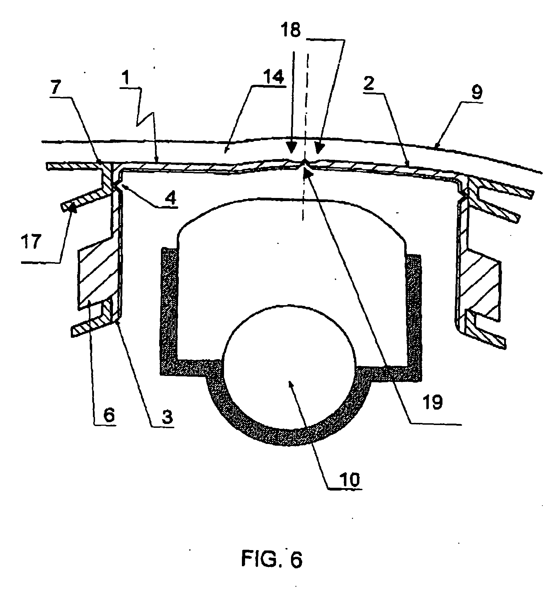

Die Figur 6 zeigt eine Ausführungsform für ein beidseitiges Öffnen der erfindungsgemäßen Airbagabdeckung 1. Dabei ist in der Mitte des Deckels 2 auf der dem Airbag 10 zugewandten Seite eine Sollbruchlinie 19 zu erkennen, die den Deckel 2 teilt.

Diese Sollbruchlinie 19 wird vorzugsweise bereits beim Gießen der Airbagabdeckung eingeführt. Der Splitterschutz 5 ist im Bereich der Sollbruchlinie 19 unterbrochen, so dass ein Aufklappen der beiden Deckelflügel ermöglicht wird. Auf der der Sollbruchlinie 19 gegenüberliegenden Seite des Trägers 7 sind zwei Profilwannen 18 zu erkennen, die einen zusätzlichen Splitterschutz beim Aufreißen des Deckels 2 entlang der Sollbruchlinie 19 bewirken. Die Airbagabdeckung 1 weist auf zwei gegenüberliegenden Seiten jeweils ein Scharnierelement 3 auf, das die bereits im Zusammenhang mit der Figur 1 beschriebenen Merkmale besitzt. Auch bei dieser Ausführungsform wird die Konturgeometrie 15 den erforderlichen Kraftverhältnissen beim Öffnen angepasst und es sind unterschiedliche Profile des Deckelrandes bzw. der Airbagöffnung vorgesehen.

Auch wenn in den Beispielen überwiegend Ausschnitte aus Instrumententafeln dargestellt sind, so kann das Erfindungsprinzip jedoch auf jede Art von Innenraumverkleidung mit integriertem Airbag angewandt werden, was nicht zuletzt auch in den entsprechend formulieretn Patentansprüchen zum Ausdruck gebracht wird.

### Bezugszeichenliste

- 1: Airbagabdeckung
- 2: Deckel
- 3: Scharnierelement
- 4: Sollbruchkerbe
- 5: Splitterschutz
- 6: Ankerprofil
- 7: Träger (Innenraumverkleidung, Instrumententafel)
- 8: Haltelasche
- 9: Formhaut
- 10: Airbag
- 11: Hohlprofil
- 12: Profilhöcker
- 13: Schwächungslinie
- 14: Schaum
- 15: Konturgeometrie
- 16: Profilnase
- 17: Anschlag (für Ankerprofil)
- 18: Profilwanne
- 19: Sollbruchlinie

## Patentansprüche

1. Einteilige Airbagabdeckung (1) für eine aus einer Formhaut (9), einem Hartschaum (14) und einem Träger (7) aufgebaute Innenraumverkleidung, mit
- einem Deckel (2) und
- mindestens einem Scharnierelement (3) mit einer als Drehachse für den Deckel (2) vorgesehenen Sollbruchkerbe (4), wobei
- das mindestens eine Scharnierelement (3) Ankerprofile (6) aufweist, die in einer Wirkverbindung stehen mit in den Träger der Innenraumverkleidung eingelassenen Haltelaschen (8), wobei die Haltelaschen (8) als Führung und Halterung für die Ankerprofile (6) vorgesehen sind,
- die Airbagabdeckung (1) mit dem mindestens einen Scharnierelement (3) beim Entfalten des Airbags (10) um den Betrag, mit dem die Haltelaschen (8) die Ankerprofile (6) des mindestens einen Scharnierelements (3) aufnehmen können, in Richtung Fahrzeuginneres verschiebbar ist,
- und der Deckel (2) nach dem Verschieben der Airbagabdeckung (1) um die als Drehachse fungierende Sollbruchkerbe (4) aufklappbar ist,
**dadurch gekennzeichnet, dass**
- die Ankerprofile (6) als in Längsrichtung geteilte T-Profile ausgebildet sind und
die Haltelaschen (8) jeweils durch zwei vertikal zur Oberfläche der Innenraumverkleidung verlaufende Rippen im Träger (7) gebildet werden, wobei die Rippen an einem Anschlag (17) für das Ankerprofil (6) enden und
sich dabei in einem spitzen Winkel unter Verengung der Führung für das Ankerprofil (6) einander leicht annähern.

2. Airbagabdeckung nach Anspruch 1,
**dadurch gekennzeichnet, dass**
die geteilten T-Profile durch zwischen den jeweiligen Teilprofilen verlaufene Querrippen verstärkt sind.

3. Airbagabdeckung nach Anspruch 1 oder 2,
**dadurch gekennzeichnet, dass**
die Innenraumverkleidung eine Instrumententafel ist.

4. Airbagabdeckung nach einem der Ansprüche 1 bis 3,
**dadurch gekennzeichnet, dass**
in die Airbagabdeckung (1) ein Splitterschutz (5) in Form eines textilen Gewebe, eines Kunststoffgewebes oder eines Bleches eingelagert ist.

5. Airbagabdeckung nach einem der Ansprüche 1 bis 4,
**dadurch gekennzeichnet, dass**
die Airbagabdeckung (1) aus einem eine Nanostruktur aufweisenden Kunststoff aufgebaut ist.

6. Airbagabdeckung nach einem der Ansprüche 1 bis 5,
**dadurch gekennzeichnet, dass**
die Airbagabdeckung (1) haftungsfrei mit dem Träger (7) für die Innenraumverkleidung verbunden ist, wobei der Deckel (2) mit einer die Öffnungskraft kontrollierenden Konturgeometrie (15) in ein korrespondierendes Profil einer Airbagöffnung des Trägers (7) eingelegt ist.

7. Airbagabdeckung nach einem der Ansprüche 1 bis 6,
**dadurch gekennzeichnet, dass**
die Airbagabdeckung (1) aus einem im Vergleich zum Material des Trägers (7) für die Innenraumverkleidung antagonistischen Material besteht, das keine haftende Verbindung mit dem Material des Trägers (7) eingeht.

8. Airbagabdeckung nach Anspruch 7,
**dadurch gekennzeichnet, dass**
das Polymermaterial für die Airbagabdeckung (1) einen höheren Schmelzpunkt aufweist als das Polymermaterial für den Träger (7) für die Innenraumverkleidung.

9. Airbagabdeckung nach Anspruch 7 oder 8,
**dadurch gekennzeichnet, dass**
das Material für die Airbagabdeckung (1) ausgewählt ist aus der Gruppe Polybutylenterephthalat (PBT), Polyoxymethylen (POM), Polyethylenterephthalat (PET), Polycarbonat (PC), Acrylnitril-Butadien-Styrol (ABS) und Polyamid (PA6) umfasst und das Material für den Träger (7) der Innenraumverkleidung Polypropylen (PP) und Polyoxymethylen (POM)umfasst.

10. Airbagabdeckung nach einem der Ansprüche 6 bis 9,
**dadurch gekennzeichnet, dass**
die Konturgeometrie (15) des Deckels (2) Vorrichtungen zur Kontrolle und Einstellung des Öffnungskraftwiderstandes des Deckels (2) sowie zur Unterstützung des definierten Aufreißens des Deckels (2) aufweist.

11. Airbagabdeckung nach Anspruch 10,
**dadurch gekennzeichnet, dass** die Konturgeometrie (15) des Deckels (2) eine zu einer V-förmigen Nut in der Airbagöffnung des Instrumententafelträgers (7) passgenaue Profilnase (16) aufweist.

12. Airbagabdeckung nach Anspruch 10 oder 11,
**dadurch gekennzeichnet, dass**
die Konturgeometrie (15) des Deckels (2) einen in die zwischen Träger (7) und Formhaut (9) angeordnete Schaumschicht (14) weisenden Profilhöcker (12) aufweist.

13. Airbagabdeckung nach einem der Ansprüche 10 bis 12,
**dadurch gekennzeichnet, dass**
die Konturgeometrie (15) des Deckels (2) im Bereich des Deckelrandes eine Profilwanne (18) aufweist.

14. Airbagabdeckung nach einem der Ansprüche 10 bis 13,
**dadurch gekennzeichnet, dass**
der Deckel (2) eine genarbte Oberfläche aufweist.

## Claims

1. A one-piece airbag covering (1) for interior panelling built up from a moulded skin (9), a hard foam (14) and a carrier (7), with
- a cover (2) and
- at least one hinge element (3) with a nominal breaking notch (4) provided as an axis of rotation for the cover (2), wherein
- the at least one hinge element (3) has anchoring profiles (6) which are operatively connected to holding plates (8) set into the carrier of the interior panelling, wherein the holding plates (8) are provided as a guide and retention means for the anchoring profiles (6),
- the airbag covering (1) is displaceable with the at least one hinge element (3) in the direction of the interior of the vehicle during the deployment of the airbag (10) by the amount by which the holding plates (8) can receive the anchoring profiles (6) of the at least one hinge element (3),
- and after the displacement of the airbag covering (1) the cover (2) is capable of being swung out around the nominal breaking notch (4) acting as an axis of rotation,
**characterized in that**
- the anchoring profiles (6) are constructed in the form of T-profiles divided in the longitudinal direction, and
the holding plates (8) are formed in each case by two ribs in the carrier (7) which extend vertically with respect to the surface of the interior panelling, wherein the ribs terminate at a stop (17) for the anchoring profile (6), and
approach each other slightly at an acute angle whilst narrowing the guide for the anchoring profile (6).

2. An airbag covering according to claim 1, **characterized in that** the divided T-profiles are reinforced by transverse ribs extending between the respective partial profiles.

3. An airbag covering according to claim 1 or 2, **characterized in that** the interior panelling is a dashboard.

4. An airbag covering according to any one of claims 1 to 3, **characterized in that** a shatter protection (5) in the form of a textile fabric, a plastics-material fabric or a metal sheet is incorporated into the airbag covering (1).

5. An airbag covering according to any one of claims 1 to 4, **characterized in that** the airbag covering (1) is built up from a plastics material having a nanostructure.

6. An airbag covering according to any one of claims 1 to 5, **characterized in that** the airbag covering (1) is joined without bonding to the carrier (7) for the interior panelling, wherein the cover (2) with a contour geometry (15) controlling the opening force is inserted into a corresponding profile of an airbag opening of the carrier (7).

7. An airbag covering according to any one of claims 1 to 6, **characterized in that** the airbag covering (1) consists of a material which is incompatible with the material of the carrier (7) for the interior panelling and which does not form a bonded join with the material of the carrier (7).

8. An airbag covering according to claim 7, **characterized in that** the polymer material for the airbag covering (1) has a higher melting point than the polymer material for the carrier (7) for the interior panelling.

9. An airbag covering according to claim 7 or 8, **characterized in that** the material for the airbag covering (1) is selected from the group comprising polybutylene terephthalate (PBT), polyoxymethylene (POM), polyethylene terephthalate (PET), polycarbonate (PC), acrylonitrile butadiene styrene (ABS) and polyamide (PA6), and the material for the carrier (7) of the interior panelling comprises polypropylene (PP) and polyoxymethylene (POM).

10. An airbag covering according to any one of claims 6 to 9, **characterized in that** the contour geometry (15) of the cover (2) has devices for the control and setting of the opening-force resistance of the cover (2) as well as for the support of the defined tearing of the cover (2).

11. An airbag covering according to claim 10, **characterized in that** the contour geometry (15) of the cover (2) has a profiled projection (16) which precisely matches a V-shaped groove in the airbag opening of the dashboard carrier (7).

12. An airbag covering according to claim 10 or 11, **characterized in that** the contour geometry (15) of the cover (2) has a profiled protuberance (12) directed into the foam layer (14) arranged between the carrier (7) and the moulded skin (9).

13. An airbag covering according to any one of claims 10 to 12, **characterized in that** the contour geometry (15) of the cover (2) has a profiled hollow (18) in the region of the edge of the cover.

14. An airbag covering according to any one of claims 10 to 13, **characterized in that** the cover (2) has a grained surface.

## Revendications

1. Recouvrement de coussin gonflable (1) en une seule pièce pour un habillage d'habitacle formé d'une peau moulée (9), d'une mousse dure (14) et d'un support (7), comportant :
- un couvercle (2), et
- au moins un élément de charnière (3) avec une encoche de rupture de consigne (4) comme axe de rotation du couvercle (2), et
- au moins cet élément de charnière (3) a un profil d'ancre (6), coopérant avec des pattes de fixation (8) intégrées dans le support de l'habillage d'habitacle,
- les pattes de fixation (8) servant de guidage et de moyens de fixation des profils en forme d'ancre (6),
- lors du déploiement du coussin gonflable (10), le recouvrement de coussin gonflable (1) étant coulissé en direction de l'intérieur du véhicule avec au moins un élément de charnière (3), de la distance par laquelle les pattes de fixation (8) reçoivent les profils en forme d'ancre (6) d'au moins un élément de charnière (3), et
- après coulissement du recouvrement de coussin gonflable (1), le couvercle (2) s'ouvre par un mouvement de rabattement autour de l'encoche de rupture de consigne (4) fonctionnant comme axe de rotation,
**caractérisé en ce que**
- les profils en forme d'ancre (6) sont réalisés sous la forme de profils En T divisés dans la direction longitudinale, et
- les pattes de fixation (8) sont formées chacune par deux nervures du support (7), dirigées chacune verticalement par rapport à la surface supérieure de l'habillage d'habitacle, les nervures se terminant à une butée (17) du profil en forme d'ancre (6), et
- elles rapprochent ainsi légèrement suivant un angle aigu en diminuant le guidage du profil en forme d'ancre (6).

2. Recouvrement de coussin gonflable selon la revendication 1,
**caractérisé en ce que**
les profils en T, divisés sont renforcés par des nervures transversales passant entre les profilés divisés respectifs.

3. Recouvrement de coussin gonflable selon la revendication 1 ou 2,
**caractérisé en ce que**
l'habillage d'habitacle est un tableau de bord.

4. Recouvrement de coussin gonflable selon les revendications 1 à 3,
**caractérisé en ce que**
le recouvrement de coussin gonflable (1) intègre une protection contre les éclats (5) sous la forme d'un tissu textile, d'un tissu en matière plastique ou d'une tôle.

5. Recouvrement de coussin gonflable selon les revendications 1 à 4,
**caractérisé en ce que**
le recouvrement de coussin gonflable (1) est composé de matière plastique à nanostructure.

6. Recouvrement de coussin gonflable selon les revendications 1 à 5,
**caractérisé en ce que**
le recouvrement de coussin gonflable (1) est relié sans accrochage au support (7) de l'habillage d'habitacle,
le couvercle (2) étant logé dans un profil correspondant d'une ouverture de coussin gonflable du support (7) avec une géométrie de contour (15) contrôlant la force d'ouverture.

7. Recouvrement de coussin gonflable selon les revendications 1 à 6,
**caractérisé en ce que**
le recouvrement de coussin gonflable (1) se compose d'une matière comparativement antagoniste de la matière du support (7) de l'habillage d'habitacle, et qui ne participe à aucune liaison d'accrochage avec la matière du support (7).

8. Recouvrement de coussin gonflable selon la revendication 7,
**caractérisé en ce que**
le polymère du recouvrement de coussin gonflable (1) a un point de fusion plus élevé que le polymère du support (7) de l'habillage d'habitacle.

9. Recouvrement de coussin gonflable selon la revendication 7 ou 8,
**caractérisé en ce que**
la matière du recouvrement de coussin gonflable (1) est choisie dans le groupe comprenant le polybutylènetéréphthalate (PBT), le polyoxyméthylène (POM), le polyéthylènetèréphthalate (PET), le polycarbonate (PC), l'acrylonitrile-butadiène-styrène (ABS) et le polyamide (PA6) et la matière du support (7) de l'habillage d'habitacle comprend le polypropylène (PP) et le polyoxyméthylène (POM).

10. Recouvrement de coussin gonflable selon les revendications 6 à 9,
**caractérisé en ce que**
la géométrie du contour (15) du couvercle (2) comporte des dispositifs pour contrôler et régler la force de résistance à l'ouverture du couvercle (2) et pour assister l'arrachage défini du couvercle (2).

11. Recouvrement de coussin gonflable selon la revendication 10,
**caractérisé en ce que**
la géométrie du contour (15) du couvercle (2) comporte un bec profilé (16) ajusté à la rainure en forme de V de l'ouverture de coussin gonflable du support de tableau de bord (7).

12. Recouvrement de coussin gonflable selon la revendication 10 ou 11,
**caractérisé en ce que**
la géométrie du contour (15) du couvercle (2) comporte un bossage de profil (12) tourné vers la couche de mousse (14) entre le support (7) et la peau de moulage (9).

13. Recouvrement de coussin gonflable selon les revendications 10 à 12,
**caractérisé en ce que**
la géométrie du contour (15) du couvercle (2) a un profil de cuvette (18) dans la zone du bord du couvercle.

14. Recouvrement de coussin gonflable selon les revendications 10 à 13,
**caractérisé en ce que**
le couvercle (2) a une surface extérieure nervurée.
